Europäisches Patentamt

European Patent Office

Office européen des brevets

Publication number: **0 216 618**
**A2**

# EUROPEAN PATENT APPLICATION

Application number: **86307247.6**

Date of filing: **19.09.86**

Int. Cl.⁴: **C 22 B 7/04**
**C 22 B 9/22**

Priority: **21.09.85 GB 8523397**

Date of publication of application:
**01.04.87 Bulletin 87/14**

Designated Contracting States:
**AT BE CH DE FR GB IT LI LU NL SE**

Applicant: **Commonwealth Smelting Limited**
**1 Redcliff Street**
**Bristol BS99 7EA (GB)**

Inventor: **Shoobridge, Peter H.**
**Caer Laverock No.2, The Retreat Camp R.**
**Weston-super-Mare Somerset (GB)**

**Halsall, Peter**
**11 Narrow Lane**
**N. Ferriby Humberside HU14 3EN (GB)**

**Cowx, Peter Malcolm**
**3, New Cottages**
**Ashbury Wiltshire (GB)**

**Heanley, Charles P.**
**c/o Tetronics Research & Development Lechlade Road**
**Faringdon, Oxford SN7 9AJ (GB)**

Representative: **Whalley, Kevin et al**
**MARKS & CLERK 57/60 Lincoln's Inn Fields**
**London WC2A 3LS (GB)**

Recovery of volatile metal values from metallurgical slags.

A method of fuming volatile metal vapours out of molten metallurgical slag comprises flowing the slag through a furnace where it is subjected to the addition of a reducing agent and the action of a high temperature plasma impinged on the surface of the slag.

EP 0 216 618 A2

## Description

### RECOVERY OF VOLATILE METAL VALUES FROM METALLURGICAL SLAGS

This invention relates to the recovery of volatile metal values from metallurgical slags and more particularly to the recovery of metallic zinc and lead from slags derived from zinc-smelting and lead-smelting blast furnaces.

The Imperial Smelting Furnace (ISF) is the only zinc blast furnace process used for primary zinc smelting. Zinc lost in slag from the ISF is commonly 5-7% of zinc fed into it. More of the zinc could be recovered from slag in the ISF by increasing the fuel ratio in feed and the retention time of slag in the furnace, but this is expensive in coke usage and reduces the production capacity of the furnace. A further problem is that the reducing conditions in the furnace hearth become such as to allow the formation of metallic iron which can accumulate inside the furnace causing blockages and unsteady operation. For these reasons most operators tap slag from the ISF with a target zinc content of between 5 and 8%, more commonly 6-7%. The slag is normally discarded. If a method for fuming zinc from slag outside the ISF could be used then conditions in the ISF could be adjusted to suit more stable operation, more efficient fuel usage and higher throughput without the need to achieve maximum zinc recovery within the ISF itself.

In other non-ferrous blast furnaces, for example the lead blast furnace, having a relatively cold top temperature, most of the zinc feed to the furnaces come out in the slag.

There are various existing procedures known and practised for fuming zinc from these slags. In one such process for lead blast furnace slag, molten slag is transferred batchwise to a separate furnace similar to a blast furnace in which powdered coal is injected through multiple tuyeres into a bath of molten slag. Zinc is vapourised and subsequently allowed to oxidise by ingress of air. Zinc oxide is collected using known dust collection equipment and further treated for recovery of zinc metal. This process is very capital intensive and requires a relatively long reaction time and because of this is not economically attractive for use with ISF slags.

Another process for fuming lead blast furnace slags uses an electric arc furnace to heat and reduce the slag. This process is also expensive to operate, consuming costly carbon electrodes and having a low efficiency of conversion of electricity to reaction energy. Such an electric arc furnace in Japan treats batches of 25 tonnes of molten slag from a lead blast furnace in a 12 hour batch cycle time and electricity consumption is reported to be 650 Kwh/t of slag.

It is possible to fume zinc from a zinc blast furnace slag by injection of powdered coal into a bath of molten slag by means of lances which penetrate the surface of the slag. The use of such lances has the disadvantages of a high rate of wear of lance material and relatively high gas flow rates to cool the lances and transport the powdered coal. The gas flow leads to higher heat losses and more costly gas cleaning requirements.

The present invention, in one aspect, provides a process for the recovery of volatile metal values from metallurgical slags, comprising flowing a stream of molten metallurgical slag through a furnace, optionally feeding a reducing agent into said slag stream, impinging on the surface of the slag stream the heat from at least one plasma torch, removing from above the slag a gas containing metal vapours, and removing treated slag of reduced metal value from the furnace.

Preferably the slag is one derived from a zinc smelting blast furnace or a lead smelting blast-furnace and the vapours are predominantly of zinc and lead.

Preferably the reducing agent is a finely-divided carbonaceous solid, more preferably fine coal or coke breeze. Preferably this is used in an amount of up to 10% of the weight of the slag being treated, more preferably 5 to 10%.

Optionally other metal-bearing solids may be fed into the molten slag.

Preferably the plasma heat is carried in an inert gas such as argon and its temperature is $2000°C - 3000°C$.

Preferably the furnace is fed directly from a forehearth in which slag is separated from molten lead at the base of a zinc-smelting or lead-smelting blast furnace.

Preferably the slag temperature in the furnace is 1200 to $1500°C$.

Zinc vapour fumed from the slag is contained in gases ventilated from the fuming furnace, which are essentially carbon monoxide with zinc and lead vapour, typically 40% Zn, 10% Pb, 50% CO. This gas composition ensures that there is no tendency for the vapour to oxidise. The zinc and other volatile metals such as lead, cadmium and silver can be collected by allowing excess air to enter the gas which oxidises the vapour and the oxides can then be collected in dust collection apparatus well known to the industry. Alternatively, zinc and the other metals can be recovered by condensation from the gas on cooling, giving impure zinc metal for further refining. Thirdly, the gases can be passed directly by injection into the shaft of a zinc blast furnace allowing recovery of the metals by the existing processes. In addition, in this way the fuel and reduction value of the carbon monoxide is usefully employed in the blast furnace process.

In a second aspect, the invention provides apparatus for the recovery of volatile metal values from molten metallurgical slags, comprising a furnace, lined with refractory material, means for feeding molten slag to one point in the furnace and for removing slag from another point in the furnace, at least one feed-means between said points for optionally feeding a reducing agent into the molten slag, at least one plasma torch between said points for impinging plasma heat on the surface of the molten slag, and means for ducting metal vapours from above the molten slag.

Preferably the furnace is elongate (rectangular or oval) or circular in plan.

Preferably the refractory material is selected from chrome magnesite, carbon and silicon carbide, and the walls of the furnace may contain cooling panels so as to form a layer of solid slag on the internal surfaces of the walls.

Preferably the feed-means is a duct for particulate solids which terminates above the level of the molten slag in the furnace.

Other feed means may be provided for feeding metal-bearing solids into the molten slag.

The plasma heat will be usually carried in a stream of inert gas, such as argon.

The invention will be further described with reference to the following illustrative Examples.

## Example 1

In an application of the process, 30 kg of granulated zinc blast furnace slag were added to a crucible of 10 kg capacity and heated using a "Tetronics" plasma torch in the manner of the invention.

During slag addition at 30 kg per hour rate fumed slag was allowed to overflow from a spigot in the crucible and was sampled. The temperature of the bath of slag and the fumed slag leaving the bath was controlled to 1500°C by adjusting the power supply to the plasma torch. Power input to the plasma torch was typically 620A, 100V, corresponding to 62 kW. During the feed and fuming cycle crushed anthracite was added by mixing with the slag at rates equivalent to zero, 7.5, 10 and 12.5% of slag weight in turn.

Samples of fumed slag were taken for analysis, two samples for each carbon addition level. The fume was oxidised and the oxide fume sampled for each carbon rate.

The fuming process reduced the zinc content of the slag from 7.5% in slag fed, down to 2.7% with zero carbon addition and to, respectively, 1.0, 1.3 and 1.4% with carbon additions of 7.5, 10 and 12.5%. The fume contained respectively 59, 66, 63 and 58% zinc for zero, 7.5, 10 and 12.5% carbon additions. Lead content of the slag was reduced from 1% in feed to 0.1% in fumed slag, and the fume collected contained 7.0 to 8.3% lead.

## Example 2

In another application of the process, 70 kg of granulated zinc blast furnace slag were added to a 10 kg capacity crucible and heated by a Tetronics plasma torch in the manner of the invention. Slag was fed at 40 kg/hr and fumed slag overflowed from a spigot in the crucible. The bath and fumed slag temperature was controlled at 1300°C. Power input to the plasma torch was typically 440A, 80V, corresponding to 36 kW. During the feeding procedure crushed charcoal was added mixed with the slag at rates equivalent to zero, 1, 2, 3, 4 and 5% of slag weight in turn.

The zinc content of the slag was reduced by the fuming process from 7.5% in feed to 5.3% without carbon addition, and to 4.3, 3.5, 3.0, 4.1 and 2.4% respectively with charcoal additions of 1, 2, 3, 4 and 5% of slag weight. The fumes contained 59, 63, 58, 66 and 65% zinc respectively with zero, 1, 3, 4 and 5% anthracite. Lead in slag was reduced from 1% to 0.25%, and lead in the fumes ranged from 9% to 14%.

## Example 3

In another example of the process, 18 tonnes of granulated zinc blast furnace slag were melted in a 1 metre diameter melting furnace which was continuously tapped through a water cooled copper transfer launder into a 200 kg capacity (1.4 m long by 0.38m. wide) fuming furnace. The furnace was heated to 1450°C by a Tetronics plasma torch in the manner of the invention. Slag was fed at feed rates of 500 to 700 kg/hr and fumed slag was continuously tapped through a water cooled tap-hole and underflow weir into 500 kg capacity steel slag boxes. The exhaust gases from both furnaces were burnt in combustion chambers and zinc oxide separated in a so-called baghouse filter system. Coke breeze was fed to the fuming furnace at the rate of 5% to 7% of slag weight.

The zinc content of slag was reduced by the fuming process from 8% by weight to approximately 2.5%. Lead in the slag was reduced from 1% to 0.1%. The zinc and lead contents of the baghouse dust were typically 65% and 11% respectively.

## Claims

1. A process for the recovery of volatile metal values from metallurgical slags, characterized by comprising flowing a stream of molten metallurgical slag through a furnace, optionally feeding a reducing agent into said slag stream, impinging on the surface of the slag stream the heat from at least one plasma torch, removing from above the slag a gas containing metal vapours, and removing treated slag of reduced metal value from the furnace.

2. A process as claimed in claim 1, characterized in that the slag is derived from a zinc-smelting or lead-smelting blast furnace and the vapours are predominantly of zinc and lead.

3. A process as claimed in claim 1 or 2, characterized in that the reducing agent is a finely divided carbonaceous solid.

4. A process as claimed in any of claims 1 to 3, characterized in that the plasma is carried in an inert gas, preferably argon.

5. A process as claimed in any of claims 1 to 4, characterized by feeding metal-bearing solids into the molten slag.

6. Apparatus for the recovery of volatile metal values from molten metallurgical slags, characterized by comprising a furnace, lined with refractory material, means for feeding molten slag to one point in said furnace and for removing slag from another point in said furnace, at least one feed-means intermediate said points for optionally feeding a reducing agent into the molten slag, at least one plasma torch intermediate said points for impinging plasma heat on the surface of the molten slag, and ducting means for removing metal vapours from above the molten slag.

7. Apparatus as claimed in claim 6, characterized by being elongate or circular in plan.

8. Apparatus as claimed in claim 6 or 7, characterized in that the refractory material is selected from chrome-magnesite, carbon and silicon carbide.

9. Apparatus as claimed in any of claims 6 to 8, characterized in that the furnace has cooling panels in the walls thereof.

10. Apparatus as claimed in any of claims 6 to 9, characterized in that the feed-means is a duct for particulate solids, which duct terminates above the level of the molten slag.

11. Apparatus as claimed in any of claims 6 to 10, characterized by further feed means for feeding metal-bearing solids into the molten slag.

12. Apparatus as claimed in any of claims 6 to 11, characterized in that the plasma heat is carried in a stream of inert gas, preferably argon.